# EUROPEAN PATENT APPLICATION

(11) **EP 4 757 007 A1**
(43) Date of publication of application: **10.06.2026**
(21) Application number: 24884078.7
(22) Date of filing: 31.07.2024
(51) Int. Cl.: H01M 10/658, H01M 10/625, H01M 50/186, H01M 50/30, H01M 50/593, H01M 50/597

(54) **BATTERY PACK**

(30) Priority: 02.11.2023 CN 202322971815 U
(71) Applicant: Eve Energy Co., Ltd., Huizhou, Guangdong 516006 (CN)
(72) Inventor: FAN, Mingcong, Guangdong 516006 (CN); LIANG, Xianyu, Guangdong 516006 (CN)
(74) Representative: Herrero & Asociados, S.L.
(86) International application number: PCT/CN2024/108921
(87) International publication number: WO 2025/092071

(57) **Abstract**

A battery pack includes: a support assembly, defining a plurality of first pressure relief holes; a first heat insulating member, connected to the support assembly; a plurality of cells, arranged on a side of the first heat insulating member away from the support assembly, where an explosion-proof valve of each of the plurality of cells directly faces a respective one of the plurality of first pressure relief holes; a second heat insulating member, connected to a side of the support assembly away from the first heat insulating member, where at least one of the first heat insulating member and the second heat insulating member seals the plurality of first pressure relief holes.

## Description

The present application claims the priority of the Chinese patent application No. 202322971815.1, filed on November 2, 2023, contents of which are incorporated herein by its entireties.

### TECHNICAL FIELD

Embodiments of the present disclosure relate to the technical field of batteries, and more specifically, to a battery pack.

### BACKGROUND

A market for new energy vehicles has been increasing in recent years, and sales of the new energy vehicles have been rising year by year. A battery system, serving as a core component of a new energy vehicle, significantly affects safety and upper limit performance of the vehicle.

In order to ensure safety of the battery pack, an end of a cell may usually be arranged with an explosion-proof valve. When the cell has thermal runaway under extreme working conditions, substances of high temperatures and high pressures may be generated inside the cell and may flush to burst the explosion-proof valve to relieve the pressure in time.

### TECHNICAL PROBLEM

The substances of high temperatures and high pressures that are emitted from one cell due to the thermal runaway may easily spread to other properly-operating cells, such that a short circuit may be caused between the properly-operating cells, resulting in heat spreading.

### SUMMARY

The present disclosure provides a battery pack, including: a support assembly, defining a plurality of first pressure relief holes; a first heat insulating member, connected to the support assembly; a plurality of cells, arranged on a side of the first heat insulating member away from the support assembly, where an explosion-proof valve of each of the plurality of cells directly faces a respective one of the plurality of first pressure relief holes; and a second heat insulating member, connected to a side of the support assembly away from the first heat insulating member, where at least one of the first heat insulating member and the second heat insulating member seals the plurality of first pressure relief holes.

### TECHNICAL EFFECT

According to the battery pack of the present disclosure, the first pressure relief hole is sealed by the first heat insulating member, and the support assembly is protected by heat and electrical insulation. When high-temperature and high-pressure substances, which are emitted due to thermal runaway from one cell, penetrate the first heat insulating member and flow into the pressure relief cavity through the corresponding first pressure relief hole, the remaining first heat insulating members sealing the remaining first pressure relief holes can prevent the high-temperature and high-pressure substances inside the pressure relief cavity from transferring heat reversely or flowing into other properly-operating cells. At the same time, the second heat insulating member ensures that the high-temperature and high-pressure substances in the pressure relief cavity do not penetrate the bottom protection plate, preventing the high-temperature and high-pressure substances in the pressure relief cavity from overflowing to damage the bottom protection plate. In this way, a short circuit is prevented from being formed between the properly-operating cells, and the battery pack is prevented from having heat spreading.

### BRIEF DESCRIPTION OF THE DRAWINGS

FIG. 1 is a perspective structural view of a battery pack according to an embodiment of the present disclosure.
FIG. 2 is an exploded view of the battery pack according to an embodiment of the present disclosure.
FIG. 3 is an enlarged view of a portion B shown in FIG. 2.
FIG. 4 is an enlarged view of a portion C shown in FIG. 2.
FIG. 5 is a cross-sectional view of the battery pack shown in FIG. 1, taken along a line A-A.
FIG. 6 is an enlarged view of a portion D shown in FIG. 5.

Reference numerals in the drawings: 10, battery pack; 100, support assembly; 110, first pressure relief hole; 120, bracket; 121, first sub-hole; 122, first extension portion; 130, tray; 131, second sub-hole; 140, case; 200, first heat insulating member; 210, valve-opening portion; 220, annular portion; 240, adhesive blocking member; 241, through hole; 250, structural adhesive; 251, mounting hole; 252, snap portion; 300, cell; 310, explosion-proof valve; 400, bottom protection plate; 500, third heat insulating member; 600, pressure relief cavity; 800, support member; 900, second heat insulating member; 910, second pressure relief hole.

### DETAILED DESCRIPTIONS

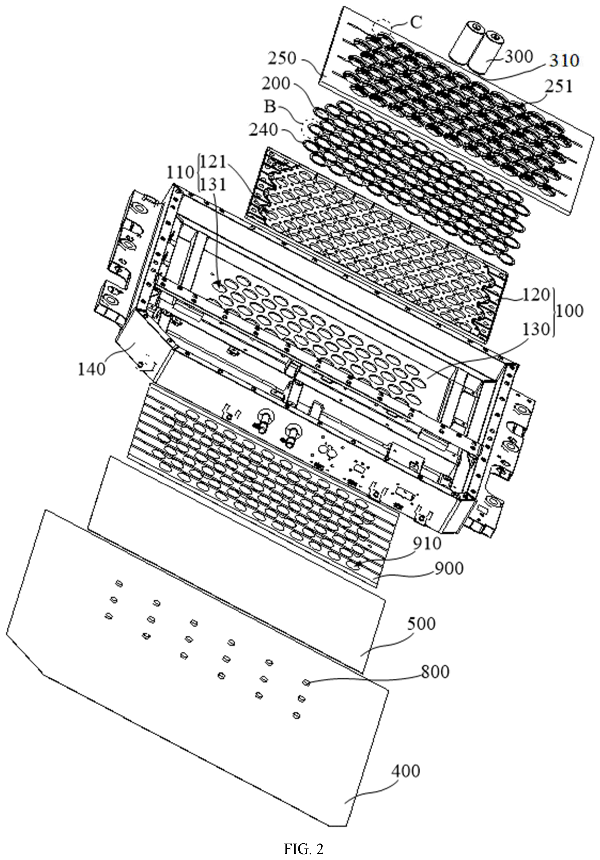

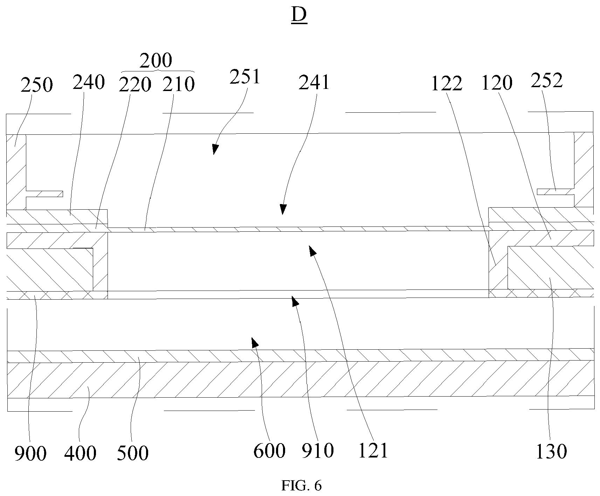

As shown in FIG. 2 and FIG. 6, the present disclosure provides a battery pack 10, the battery pack 10 includes a support assembly 100, a first heat insulating member 200, a plurality of cells 300, and a second heat insulating member 900. The support assembly 100 defines a plurality of first pressure relief holes 110. The first heat insulating member 200 is connected to the support assembly 100, the plurality of cells 300 are arranged on a side of the first heat insulating member 200 away from the support assembly 100. An explosion-proof valve 310 of each of the plurality of cells 300 is disposed directly facing towards a corresponding one of the plurality of first pressure relief holes 110. The second heat insulating member 900 is connected to a side of the support assembly 100 away from the first heat insulating member 200. At least one of the first heat insulating member 200 and the second heat insulating member 900 seals the plurality of first pressure relief holes 110. Compared to the related art, for the battery pack in the present disclosure, the first heat insulating member 200 and the second heat insulating member 900 are arranged to provide heat and electrical insulation protection for the support assembly 100. The first heat insulating member 200 and/or the second heat insulating member 900 seals the plurality of first pressure relief holes 110. When high-temperature and high-pressure substances, which are emitted from one of the plurality of cells 300 due to thermal runaway, break through a corresponding portion of the first heat insulating member 200 and/or a corresponding portion of the second heat insulating member 900. The rest portion of the first heat insulating member 200 and/or the rest portion of the second heat insulating member 900 that seal the first pressure relief holes 110 may prevent the high-temperature and high-pressure substances from transferring heat reversely or flowing into properly-operating cells 300 of the plurality of cells 300, such that the battery pack 10 may be prevented from having heat spreading.

Exemplarily, as shown in FIG. 2, the support assembly 100 includes a bracket 120, the bracket 120 defines a plurality of first sub-holes 121, the plurality of first pressure relief holes 110 include the plurality of first sub-holes 121. The first heat insulating member 200 is attached to the bracket 120 to seal the plurality of first sub-holes 121.

In an embodiment, the bracket 120 may be a plastic plate, and the plurality of first sub-holes 121 are spaced apart from each other and are evenly distributed on the bracket 120 to improve space utilization.

In an embodiment, the support assembly 100 further includes a tray 130. The tray 130 is attached to a side of the bracket 120 away from the first heat insulating member 200 and defines a plurality of second sub-holes 131. The plurality of first pressure relief holes 110 further include the plurality of second sub-holes 131. The plurality of second sub-holes 131 directly face toward the plurality of first sub-holes 121. An area of a projection of each of the plurality of second sub-holes 131 onto a horizontal plane is greater than or equal to that of a corresponding one of the plurality of first sub-holes 121 onto the horizontal plane.

Specifically, the tray 130 may be an aluminum plate to ensure strength of the support assembly 100. The bracket 120 provides electrical insulation and heat preservation. The bracket 120 may increase a distance between the tray 130 and the plurality of cells 300. In this way, a creepage distance may be increased, ensuring safety performance of the battery pack 10.

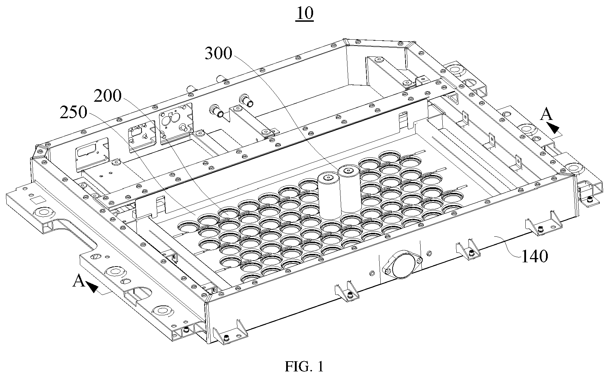

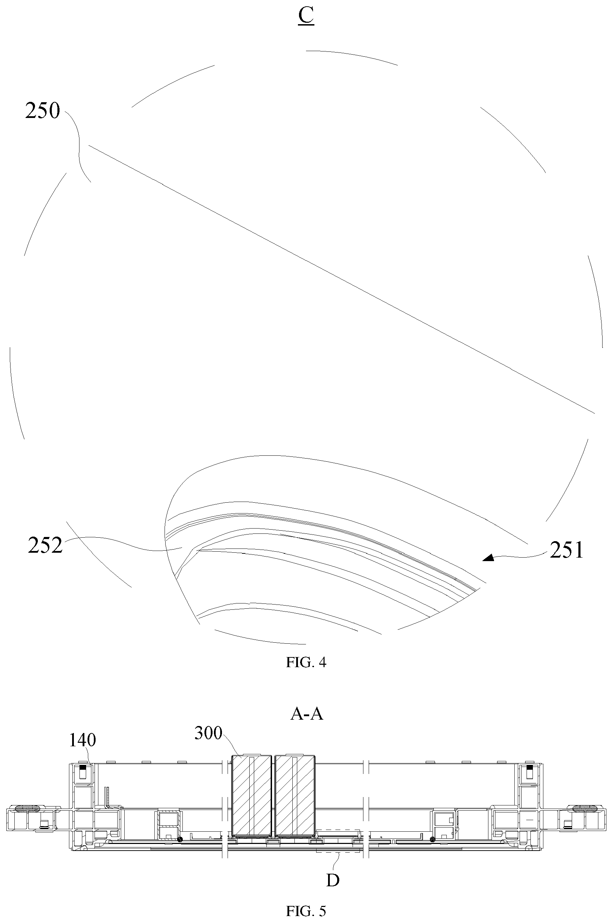

In an embodiment, as shown in FIGS. 1 and 5, the support assembly 100 further includes a case 140. The tray 130 is mounted on the case 140, and the bracket 120 is attached to the tray 130. It is understood that the case 140 may be integrally formed with the tray 130 and/or the bracket 120 as a one-piece structure.

In an embodiment, the first heat insulating member 200 may be made of mica and may be adhered to a side of the bracket 120 away from the tray 130. In this way, electrical and heat insulation protection may be provided to the bracket 120 and the tray 130. In FIG. 2, a plurality of first heat insulating members 200 may be arranged. Each of the plurality of first heat insulating members 200 covers and seals a corresponding one of the plurality of first sub-holes 121. It is understood that, in other embodiments, the first heat insulating member 200 may also be made of other heat and electrical insulating materials, and the first heat insulating member 200 may be configured as a one-piece structure, i.e., the first heat insulating member 200 may be a plate.

In other embodiments, the first heat insulating member 200 may define holes, and the second heat insulating member 900 may seal the plurality of first sub-holes 121.

In an embodiment, as shown in FIG. 6, each of the plurality of first heat insulating members 200 includes a valve-opening portion 210 and an annular portion 220. The valve-opening portion 210 directly faces towards a corresponding one of the plurality of first sub-holes 121. The annular portion 220 is connected to an outer periphery of the valve-opening portion 210 and the bracket 120. A thickness of the valve-opening portion 210 is less than a thickness of the annular portion 220. In this way, production costs of the battery pack 10 may be reduced, the high-temperature and high-pressure substances, which are emitted from one of the plurality of cells 300 due to thermal runaway, may break through the valve-opening portion 210 more easily.

Specifically, a ratio of the thickness of the valve-opening portion 210 to the thickness of the annular portion 220 is greater than or equal to 0.2 and less than or equal to 0.5. In an embodiment, the thickness of the valve-opening portion 210 is 0.1 mm, and the thickness of the annular portion 220 is greater than or equal to 0.2 mm and less than or equal to 0.5 mm.

In an embodiment, an area of a projection of each valve-opening portion 210 onto the horizontal plane of is greater than or equal to 80% of that of a corresponding one of the plurality of cells 300 onto the horizontal plane and is less than or equal to that of a corresponding one of the plurality of first sub-holes 121 onto the horizontal plane. The area of the projection of each of the plurality of first sub-holes 121 onto the horizontal plane is less than or equal to an area of the projection of a corresponding one of the plurality of second sub-holes 131 onto the horizontal plane. According to the area of the projection of the valve-opening portion 210, the first sub-hole 121 and the second sub-hole 131, a redundant configuration is ensured, and improving reliability of the protection provided by the first heat insulating member 200.

In an embodiment, as shown in FIG. 6, the bracket 120 is arranged with a first extension portion 122 extending toward the corresponding second sub-hole 131 at an outer peripheral edge of each first sub-hole 121. The first extension portion 122 may be inserted into the second sub-hole 131 and abut against or is spaced apart from a side wall of the second sub-hole 131. An extending length of the first extension portion 122 is equal to a thickens of the tray 130. That is, a side of the first extension portion 122 away from the first insulating member 200 is aligned with the side of the tray 130 away from the first insulating member 200. The first extension portion 122 enables the bracket 120 to be mounted to the tray 130 more easily (direct facing between the first sub-hole 121 and the second sub-hole 131 can be achieved by only inserting the first extension portion 122 into the second sub-hole 131), and provides electrical and heat insulation protection for the tray 130. Furthermore, the creepage distance may be increased, ensuring the safety performance of the battery pack 10.

In other embodiments, the first heat insulating member 200 may further be arranged with a second extension portion (not shown in the drawings) that extends towards the first sub-hole 121 and the second sub-hole 131 sequentially. The second extension portion may provide electrical and heat insulating protection to the bracket 120 and the tray 130.

In an embodiment, an end of each of the plurality of cells 300 near the valve-opening portion 210 is arranged with the explosion-proof valve 310. The explosion-proof valve 310 faces directly towards the valve-opening portion 210. When one of the plurality of cell has thermal runaway in an extreme working condition, the high-temperature and high-pressure substances generated inside the cell 300 flush to break the explosion-proof valve 310 to release a pressure in time. The high-temperature and high-pressure substances, which are emitted from the cell 300, may break through the corresponding valve-opening portion 210 and flow out through the first sub-hole 121 and the second sub-hole 131 sequentially. The annular portion 220 may prevent the high-temperature and high-pressure substances emitted from the cell 300 from flowing onto properly-operating cells 300 adjacent to the one cell having the thermal runaway. The remaining intact valve-opening portions 210 may prevent the high-temperature and high-pressure substances from transferring heat reversely or flowing onto the properly-operating cells 300.

In an embodiment, the second heat insulating member 900 may be a plate made of mica. The second heat insulating member 900 is adhered to the side of the tray 130 away from the bracket 120. The high-temperature and high-pressure substances emitted from the cell 300 having the thermal runaway may flow out after penetrating the first heat insulating member 200 and the second heat insulating member 900 sequentially. The second heat insulating member 900 may prevent the high-temperature and high-pressure substances from transferring heat reversely and from flowing to reach other properly-operating cells 300, and may further provide electrical and heat insulation protection for the bracket 120 and the tray 130. In other embodiments, the second heat insulating member 900 may be made of other electrical and heat insulating materials.

In an embodiment, the second heat insulating member 900 may define a plurality of second pressure relief holes 910. Each of the plurality of second pressure relief holes 910 is communicated to and directly faces a corresponding one of the plurality of second sub-holes 131. Each of the second pressure relief holes 910 may be greater than or equal to the area of the projection of the corresponding first sub-hole 121 onto the horizontal plane and less than or equal to the area of the projection of the corresponding second sub-hole 131. By defining the plurality of second pressure relief holes 910, the second heat insulating member 900 is prevented from being disengaged from the support assembly 100, due to being impacted by the high-temperature and high-pressure substances.

In other embodiments, the second heat insulating member 900 may be arranged with a plurality of weak portions (not shown). Each of the plurality of weak portions directly faces towards a corresponding one of the plurality of second sub-holes 131. An area of a projection of each of the plurality of weak portions onto the horizontal plane is greater than or equal to the area of the projection of a corresponding one of the plurality of first sub-holes 121 onto the horizontal plane and is less than or equal to the area of the projection of the corresponding one of the plurality of second sub-holes 131 onto the horizontal plane. A thickness of each weak portion is less than a thickness of remaining portions of the second heat insulating member 900 (portions out of the weak portion). By arranging the weak portions, the production costs may be reduced, and the weak portions may be more easily broken through by the high-temperature and high-pressure substances. In this way, the second heat insulating member 900 is prevented from detaching from the tray 130 due to being impacted by the high-temperature and high-pressure substances.

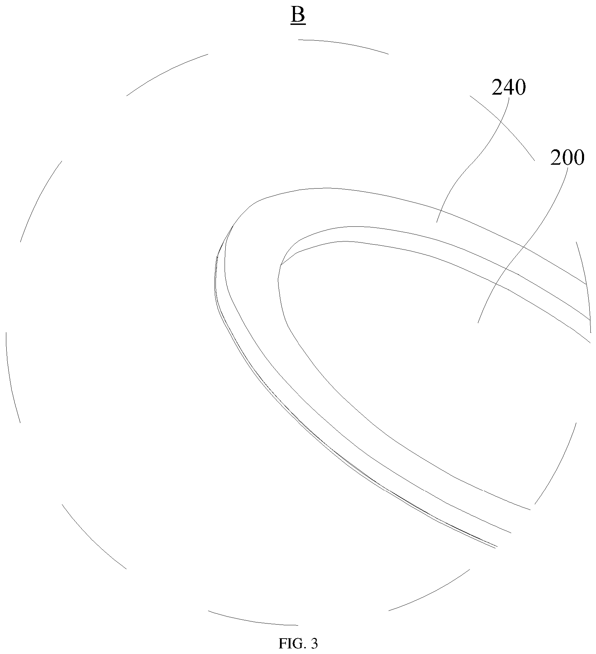

In an embodiment, as shown in FIGS. 2, 3, and 6, the battery pack 10 further includes an adhesive blocking member 240. The adhesive blocking member 240 is arranged on the side of the first heat insulating member 200 away from the bracket 120 and defines a plurality of through holes 241. Each of the plurality of through holes 241 directly faces a corresponding one of the plurality of cells 300 and a corresponding one of the plurality of first sub-holes 121. An area of a projection of each of the plurality of through holes 241 onto the horizontal plane is greater than or equal to the area of the projection of the corresponding valve-opening portion 210 onto the horizontal plane. It is understood that, in other embodiments, the adhesive blocking member 240 may be integrally formed with the first heat insulating member 200 as a one-piece structure. That is, the adhesive blocking member 240 is integrally formed with the annular portion 220 as a one-piece structure. In this way, the number of steps of assembling the battery pack 10 is reduced, and a production efficiency may be improved.

The adhesive blocking member 240 may be a plate made of adhesive blocking foam and is configured to contact an end surface of the cell 300. A thickness of the adhesive blocking member 240 is determined based on flatness of the support assembly 100 and a height of a stack of cells. In an embodiment, the thickness of the adhesive blocking member 240 is greater than or equal to 1 mm. In this way, the adhesive blocking member 240 may block adhesives, preventing an adhesive from flowing to reach the explosion-proof valve 310 of the cell 300; and may enable the cell 300 to be spaced apart from the first heat insulating member 200, ensuring development of cells 300 to be performed smoothly.

In an embodiment, as shown in FIG. 2, the battery pack 10 further includes a structural adhesive 250. The structural adhesive 250 is connected to a side of the adhesive blocking member 240 away from the first heat insulating member 200, so as to adhere the plurality of cells 300 to the adhesive blocking member 240.

In an embodiment, as shown in FIGS. 4 and 6, the structural adhesive 250 defines a plurality of mounting holes 251. The mounting holes 251 directly face towards the plurality of through holes 241. Each of the plurality of cells 300 is adhered to an interior of a corresponding one of the plurality of mounting holes 251. A snap portion 252 is formed on a side wall of each of the plurality of mounting holes 251. The snap portion 252 is configured to be snapped to a side wall of the cell 300. In this way, the cell 300 may be more stable after being mounted.

In an embodiment, the battery pack 10 further includes a bottom protection plate 400, the bottom protection plate 400 is disposed on a side of the tray 130 away from the plurality of cells 300. A pressure relief cavity 600 is formed between the tray 130 and the bottom protection plate 400. The second heat insulating member 900 is received in the pressure relief cavity 600. When the high-temperature and high-pressure substances emitted from one cell 300 due to thermal runaway penetrates the respective first heat insulating member 200 and/or the second heat insulating member 900 and flows into the pressure relief cavity 600. The first heat insulating member 200 and/or the second heat insulating members 900 for sealing the remaining first pressure relief holes 110 may prevent the high-temperature and high-pressure substances in the pressure relief cavity 600 from transferring the heat reversely or from flowing into the remaining properly-operating cells 300. In this way, heat spreading across the battery pack 10 may be prevented.

In an embodiment, the bottom protection plate 400 is detachably mounted on the case 140, or the bottom protection plate 400 and the case 140 are integrally formed as a one-piece structure.

In an embodiment, as shown in FIG. 2, the battery pack 10 further includes a plurality of support members 800. The plurality of support members 800 are spaced apart from each other and are disposed between the tray 130 and the bottom protection plate 400 and are connected to the tray 130 and the bottom protection plate 400. The plurality of support members 800 are configured to improve overall stiffness of the battery pack 10 to ensure a height of the pressure relief cavity 600 and to prevent the bracket 120 and the tray 130 from being collapsed towards the bottom protection plate 400 due to the gravitational force of the plurality of cells 300.

The plurality of support members 800 may extend through the second heat insulating member 900 and may be directly connected to the tray 130. Alternatively, the plurality of support members 800 may be indirectly connected to the tray 130 through the second heat insulating member 900.

In an embodiment, each of the plurality of support members 800 is a cushioning block. The cushioning block is bonded to the tray 130 and the bottom protection plate 400. Alternatively, each support member 800 may be a bump of the bottom protection plate 400 added with a cushioning material or a bump of the tray 130 added with a cushioning material. That is, the plurality of support members 800 may be integrally formed with the tray 130 or the bottom protection plate 400.

A height of each support member 800 may be greater than or equal to the height of the pressure relief cavity 600. A support force provided by the plurality of support members 800 is greater than the gravitational force of all of the plurality of cells 300. A projection of each support member 800 onto a horizontal plane does not coincide with a projection of each second sub-hole 131 onto the horizontal plane, preventing the plurality of support members 800 from blocking flowing of the high-temperature and high-pressure substances from the plurality of second sub-holes 131 into the pressure relief cavity 600.

In an embodiment, as shown in FIGS. 2 and 6, the battery pack 10 further includes a third heat insulating member 500. The third heat insulating member 500 may be a plate made of mica. The third heat insulating member 500 is adhered to a side of the bottom protection plate 400 near the tray 130 and is received in the pressure relief cavity 600. A stress resistant strength of the third heat insulating member 500 is greater than a stress resistant strength of the first heat insulating member 200. In this way, it is ensured that the high-temperature and high-pressure substances in the pressure relief cavity 600 does not penetrate the bottom protection plate 400. In other embodiments, the third heat insulating member 500 may be made of other heat and electrical insulating materials.

In an embodiment, a thickness of the third heat insulating member 500 is greater than or equal to 0.50 mm and is less than or equal to 2.00 mm, so as to control production costs of the battery pack 10.

In an embodiment, an area of a projection of the third heat insulating member 500 onto the bottom protection plate 400 is greater than or equal to 110% of an area of a projection of the plurality of cells 300 onto the bottom protection plate 400. In this way, safety performance of the battery pack 10 is ensured.

Compared to the related art, for the battery pack 10 of the present disclosure, the support assembly 100 is thermally and electrically insulated by the first heat insulating member 200 and the second heat insulating member 900. The first heat insulating member 200 and/or the second heat insulating member 900 seals the plurality of first pressure relief holes 110. When the high-temperature and high-pressure substances emitted from one cell 300 due to thermal runaway penetrates the corresponding first heat insulating member 200 and/or the second heat insulating member 900, the first heat insulating member 200 and/or the second heat insulating member 900 for sealing the remaining first pressure relief holes 110 may prevent the high-temperature and high-pressure substances from transferring heat reversely or from flowing into the remaining properly-operating cells 300, such that heat spreading in the battery pack 10 may be avoided.

## Claims

1. A battery pack, comprising:
a support assembly, defining a plurality of first pressure relief holes;
a first heat insulating member, connected to the support assembly;
a plurality of cells, arranged on a side of the first heat insulating member away from the support assembly, wherein an explosion-proof valve of each of the plurality of cells directly faces a respective one of the plurality of first pressure relief holes;
a second heat insulating member, connected to a side of the support assembly away from the first heat insulating member, wherein at least one of the first heat insulating member and the second heat insulating member seals the plurality of first pressure relief holes.

2. The battery pack according to claim 1, wherein, the support assembly comprises a bracket, the bracket defines a plurality of first sub-holes, the plurality of first pressure relief holes comprises the plurality of first sub-holes; the first heat insulating member is attached to the bracket.

3. The battery pack according to claim 2, wherein the first heat insulating member seals the plurality of the first sub-holes; the first heat insulating member comprises a plurality of first heat insulating members; each of the plurality of first heat insulating members comprises a valve-opening portion and an annular portion; the valve-opening portion directly faces opposite a respective one of the plurality of first sub-holes; the annular portion is connected to an outer periphery of the valve-opening portion and the bracket; and a thickness of the valve-opening portion is less than a thickness of the annular portion.

4. The battery pack according to claim 3, wherein, a ratio of the thickness of the valve-opening portion to the thickness of the annular portion is greater than or equal to 0.2 and is less than or equal to 0.5.

5. The battery pack according to claim 3, wherein, an area of a projection of the valve-opening portion of each of the plurality of first heat insulating members onto a horizontal plane is greater than or equal to 80% of an area of a projection of a respective one of the plurality of cells onto the horizontal plane and is less than or equal to an area of a projection of the respective first sub-hole onto the horizontal plane.

6. The battery pack according to claim 2, wherein, the support assembly further comprises a tray, the tray is disposed on a side of the bracket away from the first heat insulating member and defines a plurality of second sub-holes; the plurality of first pressure relief holes further comprises the plurality of second sub-holes; each of the plurality of second sub-holes directly faces a respective one of the plurality of first sub-holes; an area of a projection of each of the plurality of second sub-holes onto a horizontal plane is greater than or equal to an area of a projection of the respective first sub-hole onto the horizontal plane; the second heat insulating member is attached to a side of the tray away from the bracket.

7. The battery pack according to claim 6, wherein, the bracket is arranged with a plurality of first extension portions extending towards the plurality of second sub-holes; or the first heat insulating member is arranged with a second extension portion extending towards the plurality of first sub-holes and the plurality of second sub-holes sequentially.

8. The battery pack according to claim 6, wherein, the second heat insulating member defines a plurality of second pressure relief holes; each of the plurality of second pressure relief holes directly faces a respective one of the plurality of second sub-holes; an area of a projection of each of the plurality of second pressure relief holes onto the horizontal plane is greater than or equal to the area of the projection of the respective first sub-hole onto the horizontal plane and is less than or equal to the area of the projection of the respective second sub-hole onto the horizontal plane.

9. The battery pack according to claim 6, wherein, the second heat insulating member is arranged with a plurality of weak portions; each of the plurality of weak portions is arranged directly facing to a respective one of the plurality of second sub-holes; an area of a projection of each of the plurality of weak portions onto the horizontal plane is greater than or equal to the area of the projection of the respective first sub-hole onto the horizontal plane and is less than or equal to the area of the projection of the respective second sub-hole onto the horizontal plane.

10. The battery pack according to any one of claims 1 to 9, further comprising an adhesive blocking member, wherein, the adhesive blocking member is attached to a side of the first heat insulating member away from the support assembly and is in contact with end surfaces of the plurality of cells; the adhesive blocking member defines a plurality of through holes; each of the plurality of through holes directly faces a respective one of the plurality of cell and a respective one of the plurality of first pressure relief holes.

11. The battery pack according to claim 10, further comprising a structural adhesive, wherein the structural adhesive is connected to a side of the adhesive blocking member away from the first heat insulating member; the structural adhesive defines a plurality of mounting holes; the plurality of cells are mounted respectively in the plurality of mounting holes; a snap portion is arranged on a side wall of each of the plurality of mounting holes; and the snap portion is configured to snap to a side wall of the respective cell.

12. The battery pack according to any one of claims 1 to 9, further comprising a bottom protection plate, wherein the bottom protection plate is arranged on a side of the support assembly away from the plurality of cells, and a pressure relief cavity is formed between the bottom protection plate and the support assembly.

13. The battery pack according to claim 12, further comprising a plurality of support members, wherein the plurality of support members are spaced apart from each other and are disposed between the support assembly and the bottom protection plate.

14. The battery pack according to claim 13, wherein, each of the plurality of support members is a cushioning block, and the cushioning block is adhered to the support assembly and the bottom protection plate.

15. The battery pack according to claim 12, further comprising a third heat insulating member, wherein the third heat insulating member is arranged on a side of the bottom protection plate near the support assembly and is received in the pressure relief cavity.

16. The battery pack according to claim 15, wherein, an area of a projection of the third heat insulating member onto the bottom protection plate is greater than or equal to 110% of an area of a projection of the plurality of cells onto the bottom protection plate.
